# FASCICULE DE BREVET EUROPEEN

(11) **EP 1 618 233 B1**
(45) Date de publication et mention de la délivrance du brevet: **27.08.2008**
(21) Numéro de dépôt: 04742600.2
(22) Date de dépôt: 28.04.2004
(51) Int. Cl.: D01D 5/00

(54) **PROCEDE D OBTENTION DE FIBRES A HAUTE TENEUR EN PARTICULES C OLLOIDALES ET FIBRES COMPOSITES OBTENUES**
VERFAHREN ZUR HERSTELLUNG VON FASERN MIT HOHEM KOLLOIDALEN TEILCHENANTEIL UND DARAUS HERGESTELLTE ZUSAMMENGESETZTE FASERN
METHOD FOR THE PRODUCTION OF FIBRES WITH A HIGH CONTENT OF COLLOIDAL PARTICLES AND COMPOSITE FIBRES OBTAINED THUS

(30) Priorité: 30.04.2003 FR 0305379
(43) Date de publication de la demande: 25.01.2006
(73) Titulaire: CENTRE NATIONAL DE LA RECHERCHE SCIENTIFIQUE (CNRS), 75794 Paris Cedex 16 (FR); Université des Sciences et Technologies (Bordeaux 1), 33405 Talence (FR)
(72) Inventeur: POULIN, Philippe, F-33400 Talence (FR); BADAIRE, Stéphane, F-24400 Mussidan (FR); ZAKRI, Cécile, F-33114 Le Barp (FR); MAUGEY, Maryse-Marie-Thérèse, F-33170 Gradignan (FR)
(74) Mandataire: Bredema
(86) Numéro de dépôt international: PCT/FR2004/001034
(87) Numéro de publication internationale: WO 2004/099475

(56) Documents cités:
- FR-A- 2 805 179
- GB-A- 1 174 959
- POULIN P ET AL: "Films and fibers of oriented single wall nanotubes" CARBON, XX, XX, vol. 40, no. 10, août 2002 (2002-08), pages 1741-1749, XP004371674 ISSN: 0008-6223

## Description

La présente invention concerne un procédé d'obtention de fibres composites à teneur accrue en particules colloïdales à partir d'une pré-fibre comprenant un liant polymérique et des particules colloïdales, les fibres ainsi obtenues et les applications de ces fibres.

On entend par pré-fibre, au sens de l'invention, toute fibre composite comprenant un liant polymérique et des particules colloïdales qui n'a pas encore subi le procédé selon l'invention. Cette définition couvre, en particulier, les pré-fibres encore dans la ligne de production des fibres composites à teneur accrue en particules colloïdales et les fibres achevées et prêtes à l'emploi sur lesquelles on souhaite mettre en oeuvre le procédé selon l'invention.

L'utilisation du terme pré-fibre par la suite portera donc ce sens.

A contrario, le terme fibre sera réservé à l'appellation du produit fini ayant subi un traitement permettant d'accroître le taux de particules colloïdales ou de fibres finies servant de référence et/ou de point de comparaison.

La norme UIPAC définit au sens général les particules colloïdales comme étant des particules dont la taille est comprise entre 1 nanomètre et quelques micromètres. La présente invention se réfèrera à cette définition lorsque le terme « particules colloïdales » sera employé.

A titre d'exemple, les nanotubes, et plus particulièrement les nanotubes de carbone, représentent une référence en ce qui concerne les particules colloïdales et leur application dans la réalisation de fibres composites.

En particulier, les nanotubes de carbone possèdent des caractéristiques physiques (conductivité thermique, électrique, propriétés mécaniques, grande surface spécifique, capacité à se déformer sous injection de charge...) remarquables. Ces propriétés font des nanotubes de carbone des matériaux utilisables pour une multitude d'applications : composites, émission d'électrons, capteurs, actionneurs électromécaniques, textile conducteurs, électrodes, stockage d'hydrogène, batteries.

Afin d'être exploités plus facilement, les nanotubes peuvent être filés, comme par exemple dans le brevet FR 02 805 179 ou inclus en tant que charge dans une fibre composite.

Les fibres obtenues sont habituellement constituées de polymères organiques et de nanotubes de carbone. Cette composition particulière peut conférer des propriétés intéressantes à la fibre (facilité de mise en oeuvre, souplesse, coût peu élevé...), mais n'est pas optimale dans de nombreuses situations.

En effet, il serait souvent souhaitable de pouvoir disposer de fibres contenant une très haute teneur en nanotubes de carbone et une faible quantité de polymère ou alors, le cas échéant, pas de polymère du tout. Ceci permettrait d'obtenir de meilleures propriétés de transport électrique ou thermique, d'accéder plus facilement à la surface des nanotubes pour les applications électrochimiques et d'adsorption des nanotubes (capteurs, stockage d'énergie, actionneurs).

Le procédé de filage décrit dans le brevet FR 02 805 179 consiste à assembler des nanotubes dans l'écoulement d'une solution coagulante. Ceci est réalisé en injectant, à travers une filière, une dispersion de nanotubes dans l'écoulement de la solution coagulante. Dans le cas de systèmes aqueux, la dispersion de nanotubes est généralement obtenue par l'utilisation d'espèces amphiphiles, telles que le sodium dodécyl sulfate (SDS). Il se forme, lors de l'injection, une pré-fibre. Cette pré-fibre peut ensuite être séchée et densifiée pour aboutir à une fibre finale. Les solutions coagulantes habituellement utilisées sont des solutions de polymères, notamment de polyvinyl alcool (PVA). Elles sont d'utilisation aisée et assurent une bonne fiabilité au procédé.

Cependant, la fibre finale contient une proportion importante de polymère, ce qui peut engendrer les problèmes ci-dessus évoqués.

Selon le principe du brevet FR 02 805 179, une autre méthode pour obtenir des fibres à très haute teneur en nanotubes est envisageable. Il s'agit, au lieu d'utiliser une solution de polymère comme solution coagulante, d'employer une solution d'acide, notamment d'acide chlorhydrique à 37% en masse dans l'eau. Le reste du procédé reste inchangé.

De façon générale, il est également possible d'utiliser un mauvais solvant des nanotubes initialement dispersés, ce mauvais solvant étant partiellement miscible avec le solvant de dispersion des nanotubes. On entend par "mauvais solvant", un solvant qui, par sa nature ou les agents qu'il contient, entraîne la coagulation des nanotubes.

L'acide a ici pour rôle d'hydrolyser les tensio-actifs utilisés pour disperser les nanotubes, et ce, dès que la dispersion (nanotubes/SDS/eau) entre en contact avec cet acide. Du fait de la rapidité du processus d'hydrolyse, les nanotubes, qui ne sont plus stabilisés par un agent amphiphile, se réagrègent sous l'action des forces de Van Der Waals, tout en gardant l'alignement qui leur est conféré par la vitesse d'injection de la dispersion.

Par ce procédé, on peut ainsi obtenir des fibres constituées à 100% de nanotubes alignés. Ces fibres sont manipulables et des mesures de conductivité ont révélé une très basse résistivité de l'ordre de 5.10⁻³ ohm.cm ce qui représente un gain d'un facteur 200 par rapport à une fibre non traitée faite selon l'enseignement principal du brevet FR 02 805 179 avec du PVA comme agent de coagulation.

Cette variante rend alors les fibres particulièrement intéressantes pour des applications comme les actionneurs ou encore les textiles conducteurs, applications pour lesquelles une haute conductivité est nécessaire.

Le filage direct, c'est-à-dire sans polymères coagulants, pose cependant une difficulté. En effet, même s'il s'avère efficace pour donner des fibres à très haute teneur en nanotubes, il est moins fiable que le procédé avec polymère et les fibres obtenues restent très délicates à manipuler.

Des procédés de traitement ont été proposés qui reposent essentiellement sur l'utilisation d'un procédé de filage reposant sur le procédé avec polymère décrit ci-dessus, suivi d'une élimination partielle ou totale du polymère notamment dans le cadre d'application de fibres où la présence d'un tel polymère serait gênante. Même si cette approche demande une étape supplémentaire dans la préparation, elle permettrait un gain notable en fiabilité et robustesse de procédé.

Le moyen le plus simple, le plus décrit et le mieux connu pour éviter la présence de polymère organique sur la fibre consiste à la faire chauffer à haute température pour brûler ou pyrolyser le polymère. La pré-fibre doit alors déjà contenir une fraction importante de nanotubes pour résister à ce traitement. Un taux minimum de nanotubes de l'ordre de 15 à 30% est alors nécessaire au départ. De plus, un tel traitement peut provoquer une dégradation des propriétés intrinsèques des nanotubes et une désorganisation de la fibre proprement dite.

Des pré-fibres, par exemple issues du procédé décrit dans le brevet FR 02 805 179 peuvent y résister.

Toutefois le procédé thermique ci-dessus décrit est un procédé violent et particulièrement difficile à contrôler si l'on veut préserver l'intégrité de la fibre et/ou des nanotubes. En particulier, les fibres ainsi obtenues ont tendance à devenir cassantes après un tel recuit.

Les difficultés rencontrées lors des traitements des pré-fibres comportant des nanotubes de carbones sont bien entendu les mêmes lorsque les pré-fibres comprennent des particules colloïdales autres que les nanotubes de carbone et par exemples des whiskers de SiC, ou des nanofilaments de carbone, ou des nanotubes de nitrures de bore.

Les inventeurs ont donc mis au point un procédé d'obtention de fibres composites comprenant un liant polymérique et des particules colloïdales, à teneur accrue en particules colloïdales, permettant l'élimination douce et contrôlée du liant polymérique, d'une mise en oeuvre aisée et pratique et pouvant s'adapter à toutes les pré-fibres composites comprenant un liant polymérique et des particules colloïdales quel que soit le mode de synthèse et de préparation de ces pré-fibres.

A cet effet, le procédé d'obtention de fibres composites à teneur accrue en particules colloïdales à partir d'une pré-fibre comprenant un liant polymérique et des particules colloïdales, selon l'invention, se **caractérise en ce que** l'on dégrade dans des conditions de températures proches de la température ambiante la structure chimique dudit liant polymérique de manière à l'éliminer au moins partiellement.

Ce procédé pourra idéalement être mis en oeuvre pour tout type de pré-fibre comprenant un liant polymérique et des particules colloïdales et sera particulièrement adapté au cas où le taux de particules colloïdales dans la pré-fibre est inférieur à 30% en masse, ce qui devient particulièrement délicat pour les procédés connus.

En effet, le fait de recourir à un traitement doux de la pré-fibre permet de pouvoir utiliser des pré-fibres dont le taux de particules colloïdales est bien inférieur au taux normalement nécessaire pour pouvoir réaliser un traitement d'élimination du liant polymérique sans risquer de détruire ou d'endommager la cohésion de la pré-fibre

Plus particulièrement, le procédé selon l'invention pourra être mis en oeuvre pour une dite pré-fibre composite contenant au départ au moins 10 % en masse de particules colloïdales.

En effet, pour des taux inférieur à 10 % en particules colloïdales, le procédé présentera des difficultés identiques à celles rencontrées lors de la mise en oeuvre des procédés courant d'élimination du liant polymérique en risquant de désorganiser la cohésion de la pré-fibre traitée.

Avantageusement, le procédé selon l'invention comprend une étape de trempe dans ou d'exposition à un agent dégradant le liant polymérique pendant une durée et pour une concentration en agent déterminées par la quantité de polymère restante désirée.

On contrôle ainsi beaucoup mieux l'élimination du polymère. On peut optimiser les propriétés de la fibre en obtenant par exemple des fibres combinant à la fois de bonnes propriétés de transport électrique avec de bonnes propriétés mécaniques.

Plus particulièrement, le procédé selon l'invention mettra en oeuvre une dégradation dudit liant polymérique effectuée par une dégradation chimique.

A ce titre, le procédé selon l'invention mettra en oeuvre une dégradation chimique obtenue à l'aide d'un agent choisi parmi les acides, les oxydants et/ou les enzymes.

Selon une variante de mise en oeuvre du procédé selon l'invention, la dégradation dudit liant polymérique est obtenue par photochimie.

Particulièrement, le procédé selon l'invention pourra être mis en oeuvre dans un process tel que l'étape de dégradation est suivie d'une étape de lavage, d'étirage et/ou de torsion de ladite fibre.

Dans ce cas, le process tel que décrit ci-dessus pourra être considéré comme représentant l'étape finale d'un process global de manufacture de fibres composites.

Selon une autre variante du procédé selon l'invention, le process peut ne représenter qu'un post-traitement de pré-fibres composites au sens de l'invention.

Selon encore une autre variante de mise en oeuvre du procédé selon l'invention, on imprègne ensuite ladite fibre à teneur accrue en particules colloïdales d'un nouveau polymère.

Ce procédé permet en outre d'échanger le polymère qui est combiné aux particules colloïdales. En effet, après élimination chimique ou photochimique contrôlée, il est possible d'immerger la fibre dans un nouveau polymère. L'élimination du premier polymère permet d'avoir au final une plus grande quantité de polymère ajouté après fabrication.

Cette variante peut s'avérer particulièrement intéressante lorsqu'on souhaite combiner à la fois les propriétés d'une fibre à haute teneur en particules colloïdales et les propriétés particulière d'un polymère qu'il est impossible d'utiliser directement dans la ligne de fabrication des fibres composites, et notamment dans le cadre de l'utilisation d'un procédé de filage.

Préférentiellement, le nouveau polymère est choisi parmi les polymères réticulables, fonctionnalisables, thermodurcissables, pyrolysables et/ou conducteurs.

A titre de polymères pyrolysables, on peut notamment citer le polyacrylonitrille (PAN), la cellulose et les résines polyphénoliques qui, par exemple, pourront ultérieurement être transformés en carbone par un traitement thermique comme dans la fabrication de fibre de carbone classiques. On aura ainsi accès à des fibres composites carbone/nanotubes de carbone potentiellement très performantes d'un point de vue mécanique.

Préférentiellement, le procédé selon l'invention est mis en oeuvre pour un liant polymérique constitué de PVA.

Plus préférentiellement encore, le procédé selon l'invention est particulièrement adapté aux particules colloïdales qui sont des nanotubes.

Enfin, et encore plus particulièrement, le procédé selon l'invention et particulièrement adapté aux nanotubes de carbone.

La présente invention concerne également les fibres composites à haute teneur en particules colloïdales issues de ce procédé et en particulier les fibres composites comprenant un liant polymérique et des particules colloïdales caractérisées en ce qu'elle combine à la fois une résistance mécanique ← ----- → et une teneur en particules colloïdales supérieure à 70 % en masse.

Les fibres selon l'invention combinent donc résistance mécanique et teneur en nanotubes de carbone. En effet, ces fibres peuvent être facilement courbées sans se rompre ce qui permet à la fibre d'être plus facilement utilisée dans des procédés de mise en oeuvre comme le tissage, le tressage, l'inclusion dans un composite ...

Plus particulièrement, les fibres composites selon l'invention comprennent en tant que particules colloïdales des nanotubes.

Plus particulièrement encore, lesdits nanotubes sont des nanotubes de carbone.

Enfin, la présente invention concerne les applications des fibres composites définies ci-dessus au transport électrique, transport thermique, stockage et conversion d'énergie.

Pus particulièrement, les fibres selon l'invention seront utilisées pour réaliser des capteurs, des actionneurs et/ou des textiles conducteurs.

Une pré-fibre est réalisée conformément à l'enseignement du brevet FR2805179. Ce procédé consiste à assembler les nanotubes dans l'écoulement d'une solution coagulante qui peut être une solution de polymère comme une solution aqueuse de polyvinyl alcool (PVA). Il se forme en sortie de filière une pré-fibre peu dense constituée de nanotubes enchevêtrés et de PVA. Cette pré-fibre est extraite de l'eau pour être séchée. Avant d'être extraite de l'eau, elle peut être passée dans des bains d'eau pure afin d'être lavée par désorption partielle du PVA. Ensuite, lors du séchage, la pré-fibre se contracte pour former une fibre plus fine, plus dense et plus résistante mécaniquement. La structure de cette fibre peut être améliorée par des méthodes d'étirements ou de torsions. La fibre obtenue contient une fraction non négligeable de polymère, même après lavage dans l'eau pure. Pour une fibre faite avec du polyvinyl alcool (PVA), la fraction de polymère est d'environ 50 %, même après plusieurs lavages à l'eau pure. La résistivité électrique à température ambiante d'une pré-fibre de nanotubes monoparois, synthétisés par arc électrique et non purifiés, est d'environ 1 Ohm.cm, pour une fibre faite à partir d'une pré-fibre ayant subi un lavage à l'eau pure. Après 6 lavages à l'eau pure, la résistivité descend à 0.3 Ohm.cm. Des lavages supplémentaires ne permettent pas de diminution significative de la résistivité.

Pour effectuer une élimination du polymère coagulant plus contrôlée et donc pour moins fragiliser la fibre finale, la pré-fibre est trempée dans une solution contenant un agent chimique qui va dégrader le polymère et/ou contribuer à sa désorption des nanotubes. Par exemple, on utilise des solutions acides ou d'oxydants forts. La pré-fibre y est immergée pour dégrader le polymère et favoriser sa désorption sans affecter les nanotubes. Le temps de trempage dans l'acide permet de façon contrôlée de dégrader et de désorber plus ou moins de polymère. Ensuite la pré-fibre, dégagée en partie ou totalement du polymère, peut être lavée à l'eau et séchée comme dans le cas d'une pré-fibre qui contenait une grande proportion de polymère. Cette fibre pourra subir des post-traitements et être étirée ou torsadée pour améliorer la densification ou l'alignement des nanotubes le long de l'axe de la fibre.

Ces traitements sont également utilisés pour échanger ce polymère. Il est généralement difficile d'imprégner directement une fibre contenant une fraction importante de PVA avec un nouveau polymère. Après élimination partielle ou totale du PVA, dans un acide et/ou un oxydant, la pré-fibre peut être immergée dans un polymère liquide ou une solution de polymère de façon à enrober les nanotubes avec le nouveau polymère. La pré-fibre est ensuite extraite de ce bain, et séchée pour constituer une fibre plus fine et plus dense contenant les nanotubes et le nouveau polymère. Cette procédure permet donc de faire une fibre composite à très haute teneur en nanotubes avec tout type de polymère, même avec ceux qui au départ ne pouvaient être utilisés lors du filage. Dans les fibres composites classiques, il est possible d'introduire les nanotubes directement dans un polymère qui sera filé. Cependant ce filage direct ne permet pas d'introduire une grande quantité de nanotubes dans la fibre. Dès que le taux de nanotubes dépasse 10 % en masse, il devient très difficile de faire des dispersions homogènes appropriées au filage, alors que la présente invention permet de dépasser largement les 10 %, et d'accéder à des fibres composites contenant entre 30 et 100 % de nanotubes (% massique).

Les exemples décrits ci-après sont réalisés sur des pré-fibres composites de nanotubes de carbone obtenues par filage selon le procédé décrit dans le brevet FR 02 805 179.

Caractéristiques du filage :
Pré-fibre obtenue par injection d'une solution de nanotubes dans l'écoulement d'une solution de PVA. Puis séchage de la préfibre.
Nanotubes : synthétisés par arc électrique.
Solution de nanotubes : suspensions contenant 0.6 % en masse de nanotubes et 1.2 % de SDS (dispersant). La solution est homogénéisée par ultrasons.
Solution de polymère coagulant : solution aqueuse à 3 % en masse de PVA (100000g/mol et taux d'hydrolyse 88 %).
Débit d'injection de la solution de nanotubes : 50 ml/h à travers un orifice cylindrique de 0.5 mm de diamètre.
Vitesse d'écoulement de la solution PVA : 10 m/min.

La pré-fibre formée dans ces conditions est ensuite trempée dans différents bains et extraits pour être séchée et densifiée. La résistivité électrique, r, est mesurée pour attester de la diminution du taux de polymère. Celle-ci est d'autant plus faible que le taux de nanotubes est grand car le PVA est un polymère isolant et les nanotubes de carbone sont conducteurs.

Des recuits thermiques à 1000°C sous atmosphère inerte sont effectués pour obtenir des fibres de référence.

Les résultats sont donnés dans le tableau, ci-dessous.

| Réf. | Traitements | *r* (Ohm.cm) |
|---|---|---|
| a | 1 bain d'1 heure H₂O + séchage | *r* = 0.8 |
| b | 6 bains d'1 heure H₂O + séchage | *r* = 0.27 |
| c | 10 bains d'1 heure H₂O + séchage | *r* = 0.25 |
| d | Fibre b + recuit thermique | *r* = 0.01 |
| (référence) | | |
| e | 1 bain de 5 min. HCl 18 % + 1 bain d'1 heure H₂O + 1 bain de 5 min. HCl à 18 % + 1 bain d'1 heure H₂O + séchage | *r* = 0.11 |
| f | 1 bain de 5 min. HCl 37 % + 1 bain d'1 heure H₂O + 1 bain de 5 min. HCl à 37 % + 1 bais d'1 heure H₂O + séchage | *r*= 0.025 |
| g | 1 bain de 10 min. KMnO₄ 5 % + 1 bain d'1 heure H₂O + séchage | *r* = 0.07 |
| h | Fibre b + 1 bain de 5 min. HCl 37 % + 1 bain d'1 heure H₂O + séchage | *r* = 0.08 |

On constate alors les améliorations suivantes de la conductivité électrique :
- La fibre e d'un facteur supérieur à 2 par rapport à la fibre c,
- La fibre f d'un facteur supérieur à 4 par rapport à la fibre e (en augmentant la concentration en acide),
- La fibre g d'un facteur supérieur à 3 par rapport à la fibre c.
- La fibre h d'un facteur supérieur à 3 par rapport à la fibre b.

A titre de comparaison, on utilise une fibre préparée selon le même procédé de filage, mais avec un polymère coagulant qui ne se dégrade pas en présence d'acide chlorhydrique, comme un dérivé cationique hydrosoluble de polyacrylamide.

Ce polymère est utilisable comme décrit dans le brevet FR 2805179 de la même façon que le PVA. Il induit la flocculation des nanotubes sous écoulement et se prête donc au filage.

Une pré-fibre formée avec ce polymère a été trempée dans une solution aqueuse d'acide chlorhydrique, puis lavée et séchée selon les mêmes protocoles que ceux utilisés pour le PVA. Cependant, contrairement au cas du PVA, il n'y a pas d'amélioration significative de la conductivité électrique, ce qui prouve que l'augmentation de conductivité dans le cas du PVA ne provient pas d'une modification des nanotubes (dopage par exemple), mais bien de la dégradation et de la désorption du polymère en présence d'acide chlorhydrique.

Autres types de dégradation :
- Irradiation UV
Cette expérience est effectuée sur fibre séchée avec une irradiation de rayonnements UV qui permet aussi d'éliminer du polymère de façon plus contrôlée que par un recuit thermique.

| Réf. | Traitements | *r* (Ohm.cm) |
|---|---|---|
| i | H₂O fibre a + irradiation UV 15 min. | *r* = 0.30 |

- Certains enzymes présents en milieu naturel ont la capacité de dégrader des polymères tels que le PVA. Ces enzymes sont en général utilisés pour assainir les boues usagées des usines textiles, grosses consommatrices de polymères, et agissant en modifiant le polymère, puis en catalysant la réaction d'hydrolyse d'une des fonctions du polymère modifié. Une enzyme telle que *Alcaligenes Faecalis* KK314 permet ce type de dégradation avec le PVA. Il est possible d'envisager l'utilisation d'autres enzymes pour le PVA ou pour d'autres polymères.

Les données de conductivité électrique ci-dessus montrent que l'élimination du polymère en favorisant sa dégradation et/ou sa désorption par des bains dans des solutions acides ou oxydables ou par traitement UV est réelle et donne de bons résultats. En outre, plus les bains sont longs et plus la solution est concentrée en espèces oxydantes ou acides, plus l'élimination est forte.

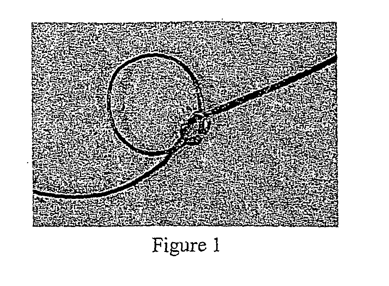

La photographie de la figure 1 montre cependant que les fibres obtenues gardent une bonne résistance aux efforts perpendiculaires. En effet, les fibres peuvent être facilement courbées, sans se rompre, contrairement au cas de fibres recuites thermiquement.

Il est possible d'éliminer le polymère avant compaction et séchage de la pré-fibre ou bien après (exemples h et i). Dans les deux cas, une diminution nette de la résistivité électrique est obtenue.

Cependant, l'élimination avant séchage et compactage présente une opportunité pour introduire un nouveau polymère et aboutir à une fibre composite à très haute teneur en nanotubes avec un polymère qui n'aurait pu être introduit initialement. Deux exemples avec une résine époxy thermodurcissable et un polymère minéral de silice sont donnés à titre d'illustration.

Des fibres composites de nanotubes dans des résines organiques ont déjà été réalisées par voie directe (introduction des nanotubes dans la résine puis filage de la résine chargée). Cette méthode ne permet pas d'introduire une grande proportion de nanotubes car il est impossible de filer un polymère trop fortement chargé.

Selon l'invention, on trempe la pré-fibre (de laquelle sont éliminées partiellement ou totalement par voie physicochimique les espèces organiques présentes) dans une solution contenant la résine. Ainsi la résine imprègne la pré-fibre.

En contrôlant la concentration en résine dans la solution (de 0 à 100 %) il est possible de maîtriser la quantité de résine absorbée. La pré-fibre imprégnée se condense en séchant pour conduire à une fibre contenant une grande proportion de nanotubes. La résine utilisée a un module de Young de 4Gpa et est isolante. Elle est diluée à 10 % massique dans une solution de DMSO (diméthylsulfoxide). En parallèle, la pré-fibre est introduite dans un bain de DMSO puis immergée dans la solution de résine pendant 10 minutes. La pré-fibre est extraite de la solution et chauffée à 180 °C pendant 2 heures de façon à durcir la résine. La fibre finale, constituée d'une fraction importante de nanotubes, est conductrice et son module de Young est de 12Gpa.

Dans le deuxième exemple, on introduit la pré-fibre dans une solution hydroalcoolique de tétraéthoxysilane(TEOS). Le TEOS, après hydrolyse, polycondense pour former un réseau tridimensionnel de silice (SiO₂). Ce réseau se forme lors du séchage de la fibre et permet d'aboutir à une fibre composite silice/nanotubes contenant une proportion importante de nanotubes. Il est possible de rendre la silice mésoporeuse par introduction de tensio-actifs (exemple bromure de triméthylcétylammonium), tout en conservant des propriétés de conduction. Cette combinaison de propriétés est particulièrement utile pour les applications électrochimiques (batteries, actionneurs, capteurs). Il est aussi possible d'induire des liaisons covalentes entre les nanotubes et le réseau minéral en utilisant des nanotubes préalablement fonctionnalisés par des fonctions chimiques aptes à se greffer sur les oligomères de silice.

Ce procédé très simple permet en fait d'imprégner les nanotubes avec tout polymère, minéral ou organique, dans la mesure où il n'y pas à disperser les nanotubes dans le polymère pour filer la pré-fibre. L'assemblage des nanotubes est effectué au préalable, le polymère étant ensuite incorporé, aucune spécificité n'étant requise quant à sa nature. Cette méthode permet de nombreuses possibilités en variant les types de polymères, leur concentration et les temps de traitements on utilise des monomères, des oligomères ou des polymères réticulables possédant des fonctions chimiques aptes à se greffer sur des nanotubes fonctionnalisés, il est possible de lier les nanotubes et le réseau polymérique de façon covalente.

Le procédé selon l'invention peut être appliqué à toute autre fibre composite réalisée selon d'autres procédés. Il est cependant nécessaire que la teneur en nanotubes, avant élimination du polymère, soit suffisante pour que la fibre garde une certaine cohésion après l'élimination du polymère. Il faut typiquement que les nanotubes forment au minimum un réseau percolé.

## Revendications

1. Procédé d'obtention de fibres composites contenant entre 30 et 100% de nanotubes qui sont des particules colloïdales à partir d'une pré-fibre comprenant un liant polymérique et des particules colloïdales, **caractérisé en ce que** l'on dégrade dans des conditions de températures de l'ordre de la température ambiante la structure chimique dudit liant polymérique de manière à l'éliminer au moins partiellement.

2. Procédé selon la revendication1, **caractérisé en ce que** le taux de particules colloïdales dans la pré-fibre est inférieur à 30 % en masse.

3. Procédé selon l'une des revendications 1 ou 2, **caractérisé en ce que** ladite pré-fibre composite contient au moins au départ 10 % en masse de particules colloïdales.

4. Procédé selon l'une, quelconque, des revendications 1 à 3, **caractérisé en ce qu'**il comprend une étape de trempe dans ou d'exposition à un agent dégradant le liant polymérique pendant une durée et pour une concentration en agent déterminées par la quantité de polymère restante désirée.

5. Procédé selon l'une, quelconque, des revendications 1 à 4, **caractérisé en ce que** la dégradation dudit liant polymérique est effectuée par une dégradation chimique.

6. Procédé selon la revendication 5 **caractérisé en ce que** ladite dégradation chimique est obtenue à l'aide d'un agent choisi parmi les acides, les oxydants et/ou les enzymes.

7. Procédé selon l'une, quelconque, des revendications 1 à 4, **caractérisé en ce que** la dégradation dudit liant polymérique est effectuée par photochimie.

8. Procédé selon l'une des revendications 1 à 7, **caractérisé en ce que** l'étape de dégradation est suivie d'une étape de lavage, d'étirage et/ou de torsion de ladite fibre.

9. Procédé selon l'une des revendications 1 à 8, **caractérisé en ce qu'**il représente l'étape finale d'un process global de manufacture de fibres composites.

10. Procédé selon l'une des revendications 1 à 8, **caractérisé en ce qu'**il représente un post-traitement de fibres composites.

11. Procédé selon l'une des revendications 1 à 10, **caractérisé en ce que** l'on imprègne ensuite ladite fibre contenant de 30 à 100 % de particules colloïdales d'un nouveau polymère.

12. Procédé selon la revendication 10, **caractérisé en ce que** le nouveau polymère est choisi parmi les polymères réticulables, fonctionnalisables, thermodurcissables, pyrolysables et/ou conducteurs.

13. Procédé selon l'une des revendications 1 à 12, **caractérisé en ce que** ledit liant polymérique est constitué de PVA.

14. Procédé selon l'une des revendications 1 à 13, **caractérisé en ce que** lesdites particules colloïdales sont des nanotubes.

15. Procédé selon l'une des revendications 1 à 14, **caractérisé en ce que** lesdits nanotubes sont des nanotubes de carbone.

16. Fibre composite comprenant un liant polymérique et des particules colloïdales **caractérisé en ce qu'**elle a une teneur en particules colloïdales supérieure à 70 % en masse.

17. Fibre selon la revendication 16 **caractérisée en ce que** lesdites particules colloïdales sont des nanotubes.

18. Fibre selon la revendication 17 **caractérisée en ce que** lesdits nanotubes sont des nanotubes de carbone.

19. Application des fibres composites selon l'une, quelconque, des revendications 16 à 18 au transport électrique, au transport thermique et/ou au stockage d'énergie.

20. Utilisation des fibres composites selon l'une, quelconque, des revendications 16 à 18 pour réaliser des capteurs, des actionneurs et/ou des textiles conducteurs.

## Claims

1. Method to obtain composite fibres containing between 30 and 100% nanotubes consisting of colloidal particles from a pre-fibre comprising a polymeric binder and colloidal particles, **characterised in that** the chemical structure of said polymeric binder is degraded under temperature conditions of the order of ambient temperature so as to eliminate said binder at least partially.

2. Method according to claim 1, **characterised in that** the colloidal particle content in the pre-fibre is less than 30% by weight.

3. Method according to any of claims 1 or 2, **characterised in that** said composite pre-fibre contains at least initially 10% by weight of colloidal particles.

4. Method according to any of claims 1 to 3, **characterised in that** it comprises a step consisting of steeping in or exposure to a degrading agent of the polymeric binder for a time and at an agent concentration determined by the desired remaining quantity of polymer.

5. Method according to any of claims 1 to 4, **characterised in that** the degradation of said polymeric binder is performed by means of chemical degradation.

6. Method according to claim 5, **characterised in that** said chemical degradation is obtained using an agent selected from acids, oxidants and/or enzymes.

7. Method according to any of claims 1 to 4, **characterised in that** the degradation of said polymeric binder is performed by means of photochemistry.

8. Method according to any of claims 1 to 7, **characterised in that** the degradation step is followed by a washing, drawing and/or twisting step of said fibre.

9. Method according to any of claims 1 to 8, **characterised in that** it represents the final step of an overall composite fibre manufacture process.

10. Method according to any of claims 1 to 8, **characterised in that** it represents a post-treatment of composite fibres.

11. Method according to any of claims 1 to 10, **characterised in that** said fibre containing 30 to 100% colloidal particles is subsequently impregnated with a new polymer.

12. Method according to claim 10, **characterised in that** the new polymer is selected from cross-linkable, functionalisable, thermosettable, pyrolysable and/or conductive polymers.

13. Method according to any of claims 1 to 12, **characterised in that** said polymeric binder consists of PVA.

14. Method according to any of claims 1 to 13, **characterised in that** said colloidal particles are nanotubes.

15. Method according to any of claims 1 to 13, **characterised in that** said nanotubes are carbon nanotubes.

16. Composite fibre comprising a polymeric binder and colloidal particles **characterised in that** it has a colloidal particle content greater than 70% by weight.

17. Fibre according to claim 16, **characterised in that** said colloidal particles are nanotubes.

18. Fibre according to claim 17, **characterised in that** said colloidal particles are carbon nanotubes.

19. Application of composite fibres according to any of claims 16 to 18 to electricity transmission, heat transmission and/or energy storage.

20. Use of composite fibres according to any of claims 16 to 18 to produce sensors, actuators and/or conductive textiles.

## Patentansprüche

1. Verfahren zum Erhalten von Verbundfasern, die zwischen 30 und 100% Nanoröhrchen enthalten, bei denen es sich um Kolloidteilchen handelt, aus einer Vorfaser, die einen polymeren Verbundstoff und Kolloidteilchen umfasst, **dadurch gekennzeichnet, dass** die chemische Struktur des besagten polymeren Verbundstoffs unter Temperaturbedingungen in der Größenordnung von Umgebungstemperatur derart abgebaut wird, dass dieser zumindest zum Teil eliminiert wird.

2. Verfahren nach Anspruch 1, **dadurch gekennzeichnet, dass** der Gehalt an Kolloidteilchen in der Vorfaser unter 30 Massen-% liegt.

3. Verfahren nach einem der Ansprüche 1 oder 2, **dadurch gekennzeichnet, dass** die besagte Verbundvorfaser mindestens ab 10 Massen-% Kolloidteilchen enthält.

4. Verfahren nach einem beliebigen der Ansprüche 1 bis 3, **dadurch gekennzeichnet, dass** es einen Eintauchschritt umfasst, in dem der polymere Verbundstoff einem Abbaumittel über eine Zeitdauer und mit einer Konzentration des Mittels, die für die erwünschte Restpolymermenge ermittelt wurden, ausgesetzt wird.

5. Verfahren nach einem beliebigen der Ansprüche 1 bis 4, **dadurch gekennzeichnet, dass** der Abbau des besagten polymeren Verbundstoffs mittels eines chemischen Abbaus bewirkt wird.

6. Verfahren nach Anspruch 5, **dadurch gekennzeichnet, dass** der besagte chemische Abbau mithilfe eines Mittels erreicht wird, der aus Säuren, Oxidationsmitteln und/oder Enzymen ausgewählt ist.

7. Verfahren nach einem beliebigen der Ansprüche 1 bis 4, **dadurch gekennzeichnet, dass** der Abbau des besagten polymeren Verbundstoffs mittels Photochemie bewirkt wird.

8. Verfahren nach einem der Ansprüche 1 bis 7, **dadurch gekennzeichnet, dass** der Abbauschritt auf einen Wasch-, Verstreckungs- und/oder Drehungsschritt der besagten Faser folgt.

9. Verfahren nach einem der Ansprüche 1 bis 8, **dadurch gekennzeichnet, dass** es den letzten Schritt eines Gesamtprozesses zur Herstellung von Verbundfasern darstellt.

10. Verfahren nach einem der Ansprüche 1 bis 8, **dadurch gekennzeichnet, dass** es eine Nachbehandlung von Verbundfasern darstellt.

11. Verfahren nach einem der Ansprüche 1 bis 10, **dadurch gekennzeichnet, dass** anschließend die besagte Faser, die 30 bis 100% Kolloidteilchen enthält, mit einem neuen Polymer imprägniert wird.

12. Verfahren nach Anspruch 10, **dadurch gekennzeichnet, dass** das neue Polymer aus vernetzbaren, funktionalisierbaren, wärmehärtbaren, pyrolysierbaren und/oder leitenden Polymeren ausgewählt ist.

13. Verfahren nach einem der Ansprüche 1 bis 12, **dadurch gekennzeichnet, dass** der besagte polymere Verbundstoff aus PVA besteht.

14. Verfahren nach einem der Ansprüche 1 bis 13, **dadurch gekennzeichnet, dass** die besagten Kolloidteilchen Nanoröhrchen sind.

15. Verfahren nach einem der Ansprüche 1 bis 14, **dadurch gekennzeichnet, dass** die besagten Nanoröhrchen Kohlenstoffnanoröhrchen sind.

16. Verbundfaser, die einen polymeren Verbundstoff und Kolloidteilchen umfasst, **dadurch gekennzeichnet, dass** sie einen Gehalt an Kolloidteilchen von mehr als 70 Massen-% aufweist.

17. Faser nach Anspruch 16, **dadurch gekennzeichnet, dass** die besagten Kolloidteilchen Nanoröhrchen sind.

18. Faser nach Anspruch 17, **dadurch gekennzeichnet, dass** die besagten Nanoröhrchen Kohlenstoffnanoröhrchen sind.

19. Anwendung von Verbundfasern nach einem beliebigen der Ansprüche 16 bis 18 zum Stromtransport, zum Wärmetransport und/oder zur Energiespeicherung.

20. Verwendung von Verbundfasern nach einem beliebigen der Ansprüche 16 bis 18 zum Herstellen von Sensoren, Schaltern und/oder textilen Leitern.
